# EUROPÄISCHE PATENTSCHRIFT

(11) **EP 0 972 868 B1**
(45) Veröffentlichungstag und Bekanntmachung des Hinweises auf die Patenterteilung: **18.08.2004**
(21) Anmeldenummer: 99106997.2
(22) Anmeldetag: 09.04.1999
(51) Int. Cl.: D01H 4/12

(54) **Lageranordnung für eine Offenend-Spinnvorrichtung**
Bearing assembly for an open-end spinning machine
Palier pour une machine de filature à bout ouvert

(30) Priorität: 20.06.1998 DE 19827606
(43) Veröffentlichungstag der Anmeldung: 19.01.2000
(73) Patentinhaber: Saurer GmbH & Co. KG, 41069 Mönchengladbach (DE)
(72) Erfinder: Coenen, Norbert, 41199 Mönchengladbach (DE)
(74) Vertreter: Hamann, Arndt, Dipl.-Ing.

(56) Entgegenhaltungen:
- EP-A- 0 499 310
- EP-A- 0 718 423
- DE-A- 2 524 061
- DE-A- 3 716 221
- DE-A- 4 022 562
- DE-A- 4 104 250

## Beschreibung

Die Erfindung betrifft eine Lagerung für eine Offenend-Spinnvorrichtung gemäß dem Oberbegriff des Anspruches 1.

Bei der Weiterentwicklung von Offenend-Spinnvorrichtungen kommt es neben der Verbesserung der Qualität der erzeugten Garne ebenfalls darauf an, den konstruktiven Aufwand derartiger Vorrichtungen zu verringern sowie deren Betrieb sicherer zu gestalten.

Besonders ausschlaggebend dabei ist bei Spinnvorrichtungen die Lagerung des Rotors sowie dessen Antrieb. Aus diesem Grunde wurden im Laufe der Jahre verschiedene Antriebs- und Lagervarianten für Spinnrotoren entwickelt.

Um Lagerreibungen bei schnellaufenden Spinnrotoren, deren Drehfrequenzen 100.000 Umdrehungen pro Minute oft deutlich überschreiten, zu minimieren, gehen Bestrebungen dahin, diese zumindest teilweise berührungsfrei zu lagern.

Eine derartiges Aggregat zum Offenendspinnen ist beispielsweise durch die DE 196 42 471 bekannt. Diese Literaturstelle beschreibt eine Offenend-Spinnvorrichtung, deren Rotor über einen Einzelantrieb verfügt und axial berührungslos gelagert ist. Die Axiallagerung erfolgt entweder permanentmagnetisch oder aerostatisch bzw. in Kombination. Die Lagerung in radialer Richtung erfolgt nach herkömmlichem Prinzip durch Abstützung im Zwickel einer Stützscheibenlagerung. Zusätzlich existiert noch eine Andruckscheibe zur Sicherung der Rotorlage im Lagerspalt.

Nachteilig ist dabei, daß es bei der radialen Rotorlagerung in Stützscheiben mit Andruckscheibe zu Reibungsverlusten kommt, insbesondere im Hinblick auf eine eventuell geschränkte Einbaulage der Achsen, zumindest der Stützscheiben. Ebenfalls nachteilig wirkt sich aus, daß der zusätzlich konstruktive Aufwand dieser Vorrichtung bezüglich des Einsatzes einer radial wirkenden Stützscheibenanordnung mit Andruckscheibe nicht unerheblich ist.

Eine gänzlich berührungslose Lageranordnung für Offenend-Spinnvorrichtungen ist beispielsweise durch die DE 2 412 174 offenbart worden. Hierbei wird der im übrigen einzelmotorisch angetriebene Spinnrotor sowohl axial als auch radial mit Gas- bzw. Luftlagern abgestützt. Nachteilig hier ist, daß durch die Verwendung einer Luftlagerung in erhöhtem Maße Konstruktionsaufwand, Wartungsaufwand sowie Luftaufbereitungsaufwand, im Bezug auf die Empfindlichkeit von aerostatischen oder aerodynamischen Lagersystemen, betrieben werden muß. Ebenfalls von Nachteil ist, daß bei einem Ausfall der Lagerenergie der Rotor ungebremst und in seiner Achsrichtung undefiniert an den Stator anlaufen kann.

In DE3808331A wird ein berührungsloses Magnetlager mit den Merkmalen des Anspruchs 1 beschrieben.

Ausgehend von Lageranordnungen für Offenend-Spinnvorrichtungen der eingangs beschriebenen Gattung liegt der Erfindung die Aufgabe zugrunde, derartige Lageranordnungen zu verbessern.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Anspruch 2 beschreibt, daß die Magnetlagerung bezüglich ihrer, bei Energieausfall, auf den Rotor wirkenden Kräfte unsymmetrisch ausgelegt ist. Dadurch ist eine Vorzugsfallrichtung des Spinnrotors bei einem Energieausfall vorgegeben. Vorteilhaft ist demnach, daß zum axialen Abfangen des Spinnrotors, was für einen kontrollierten Auslauf der Rotordrehzahl unabdingbar ist, nur ein einziges Axialfanglager notwendig ist. Dieses axiale Fanglager befindet sich dabei beispielsweise am Ende des Rotorschaftes und weist eine nur geringe räumliche Ausdehnung auf. Darüber hinaus ist das Fanglager selbst, aufgrund seines möglichen einfachen Aufbaus, kostengünstig zu fertigen.

Durch die unterschiedliche magnetische Auslegung der Komponenten, ergänzend zu Anspruch 2, ergibt sich mit Anspruch 3 der Vorteil einer hohen Betriebssicherheit des Spinnaggregates. Bei einem Ausfall der Lagerenergie wird der Rotor durch die ungleichen permanentmagnetischen Kräfte der Magnetlagerung in eine definierte axiale Richtung gedrängt. Da während des Spinnprozesses, gemäß Anspruch 1, die Mittenlage des Rotors mit einer speziellen Regelung einjustiert und gehalten wird, wird die unterschiedliche magnetische Auslegung der Lagerkomponenten bei Nennbetrieb sowie positiver und negativer Beschleunigung des Spinnrotors kompensiert.

Durch entsprechende Bestromung mindestens einer Lagerspule wird bewirkt, daß sich der Rotor beim Spinnbetrieb im axialen Kräftegleichgewicht befindet, das heißt, definiert im Bezug auf die Statormagneten der vorderen und hinteren Magnetlagerkomponenten, schwebt. Anspruch 4 beschreibt alternativ zu den Ansprüchen 2 und 3 die Verwendung einer elektrischen Schaltung zur Aufprägung einer axialen Vorzugsfallrichtung bei Energieausfall durch entsprechende, definierte Bestromung mindestens einer der Lagerspulen. Vorteilhaft ist dabei, daß die Magnetlagerkomponenten gleich ausgebildet sind, und so die Energie, die benötigt wird, um den Rotor in seiner Mittellage zu halten, gering gehalten werden kann.

In Anspruch 5 wird der vorteilhafte Einsatz eines Kondensators als Quelle zur Bestromung der Spule beschrieben. Der Vorteil des Einsatzes eines Kondensators liegt in dessen geringen Kosten und der kondensatortypischen exponentialen Entladekurve. Eine solche Entladungskurve führt zu einem spontanen Stromanstieg in der/den Spule und damit zu einer direkten Einflußnahme auf die axiale Rotorposition.

Anspruch 6 beschreibt eine alternative Energiequelle, in Form eines Akkumulators, zur Bestromung der Spule zwecks Initiierung einer vorgegebenen Vorzugsfallrichtung des Spinnrotors. Der Einsatz eines Akkus hat unter anderem den Vorteil, daß eine solche Stromquelle auch ohne zwischenzeitliche Aufladung, wie dies bei einem Kondensator notwendig ist, mehrfach hintereinander nutzbar ist.

Als weitere Möglichkeit zur Bestromung der Magnetspulen der Spinnrotorlagerungen im Falle eines Energieausfall ist durch die im Anspruch 7 beschriebene Verschaltung der jeweiligen Magnetspulen mit den Einzelantrieben der Rotoren gegeben. Bei einem Energieverlust im Versorgungsnetz erzeugen die auslaufenden Einzelantriebe im Generatorbetrieb Energie, die für eine definierte Bestromung der entsprechenden Magnetlagerspule verwendet wird. Der Vorteil einer solchen Anordnung ist einerseits, daß keine zusätzliche Energiequelle benötigt wird und daß anderseits der Generatorbetrieb zu einem nicht unerheblichen Abbremsen der auslaufenden Einzelantriebe führt. Die Spinnrotoren laufen daher, wenn sie mit ihren axialen Fanglagern in Berührung kommen, bereits mit erheblich reduzierter Drehzahl, was sich positiv auf die Lebensdauer sowohl der Rotoren als auch der Fanglager auswirkt.

In Anspruch 8 ist dargelegt, daß die bereits erwähnte elektrische Schaltung sinnvollerweise so auszulegen ist, daß mittels geeigneter Komponenten ein Abgriff des aktuellen Speisespannungswertes möglich, und dessen Vergleich mit einem definierten Mindestspannungswert möglich ist. Bei Detektierung einer Unterspannung wird auf einen Energieausfall geschlossen, und entsprechend der verwendeten Energiequelle sofort die betreffende Magnetspule bestromt. Vorteilhaft ist hier, daß der Notstromkreis während des normalen Spinnbetriebes in den Stromfluß nicht permanent integriert ist, so daß die Notstromquellen sowie die zugehörigen Bauteile nicht dauernd belastet werden.

Anspruch 9 beschreibt die Verwendung eines Axialfanglagers mit einer Justiermöglichkeit für das Axiallagerspiel, wodurch zum Beispiel Fertigungstoleranzen ausgeglichen werden können und ein optimales Lagerspiel eingestellt werden kann. Ein größeres Lagerspiel bringt beispielsweise den Rotor weiter von dem Lagermagneten weg, der ihn in die falsche Richtung ziehen würde. Das heißt, ein größeres Lagerspiel führt zu einer stabileren axialen Fixierung des Spinnrotors bei ausgefallener oder abgeschalteter Energie. Ein geringes Lagerspiel hat den Vorteil, daß die Beschleunigungsstrecke des Spinnrotors im Falle eines Energieverlustes relativ kurz ist und daher der Spinnrotor nicht so hart an das Axialfanglager anläuft.

Die Ansprüche 10 und 11 beschreiben geeignete Ausgestaltungsalternativen des abstützenden Elementes des Axialfanglagers. In Anspruch 10 auf die vorteilhafte Verwendung einer Abstützkugel eingegangen wird, deren Vorteil in einer immer gleichen Anlagefläche am spinnrotorschaft auch bei dessen Schräglage liegt. Anspruch 11 beschreibt ein abstützendes Element in Form einer Abstützspitze, die den Vorteil hat, immer punktgenau anzuliegen.

Weitere Einzelheiten der Erfindung sind den anhand von Zeichnungen dargestellten Ausführungsbeispielen zu entnehmen.

Es zeigt:
- Fig.1:: in Seitenansicht eine OE-Spinnvorrichtung mit einer berührungslosen, passiven Spinnrotorlagerung und einem rotorschaftendseitig angeordneten Fanglager, teilweise im Schnitt,
- Fig.2:: die Spinnrotorlagerung gemäß Fig.1 in einem vergrößerten Maßstab, ebenfalls teilweise im Schnitt,
- Fig.3:: den Endbereich einer magnetischen Spinnrotorlagerung mit einem Axialfanglager, während des Spinnprozesses,
- Fig.4:: den Endbereich einer magnetischen Spinnrotorlagerung mit einem Axialfanglager, mit einer alternativen Ausführungsform eines Axialfanglagers, ebenfalls während des Spinnprozesses,
- Fig.5:: die Spinnrotorlagerung gemäß Fig.3, bei einem Energieausfall,
- Fig.6:: die Spinnrotorlagerung gemäß Fig.2, mit einer elektrischen Schaltung in Black-Box Darstellung,
- Fig.7a-d:: beispielhafte Schaltungsentwürfe für die elektrische Schaltung,
- Fig.8:: die Spinnrotorlagerung gemäß Fig.2, mit einem magnetischen Axialfanglager.

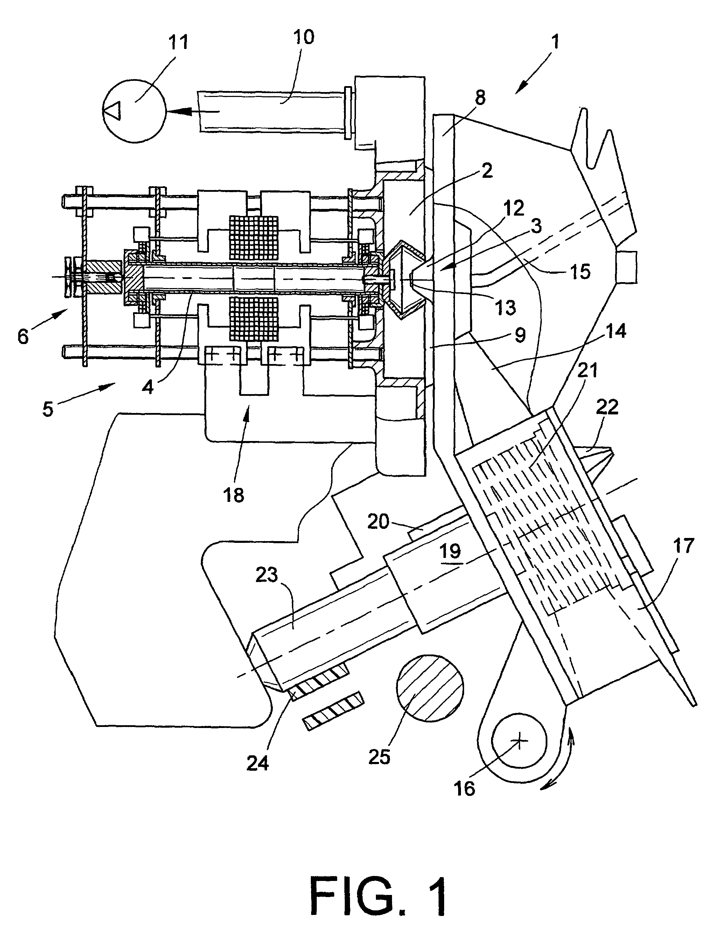

Die in Figur 1 dargestellte Offenend-Spinnvorrichtung trägt insgesamt die Bezugszahl 1.

Die bekannte OE-Spinnvorrichtung 1 verfügt, wie üblich, über ein Rotorgehäuse 2, in dem die Spinntasse eines Spinnrotors 3 mit hoher Drehzahl umläuft. Der Spinnrotor 3 wird dabei durch einen elektrischen Einzelantrieb 18 angetrieben und ist mit seinem Rotorschaft 4 in den Magnetlagerkomponenten 32, 33, 34; 42, 43, 44 einer Magnetlagerung 5 fixiert, die den Spinnrotor 3 sowohl radial als auch axial abstützt.

Wie üblich, ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen. Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt. Im Deckelelement 8 bzw. in der Kanalplatte ist ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an.

Das Deckelelement 8 ist um eine Schwenkachse 16 begrenzt drehbar gelagert und besitzt ein Auflösewalzengehäuse 17. Außerdem weist das Deckelelement 8 rückseitig Lagerkonsolen 19, 20 zur Lagerung einer Auflösewalze 21 beziehungsweise eines Faserbandeinzugszylinders 22 auf. Die Auflösewalze 21 wird im Bereich ihres Wirteis 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

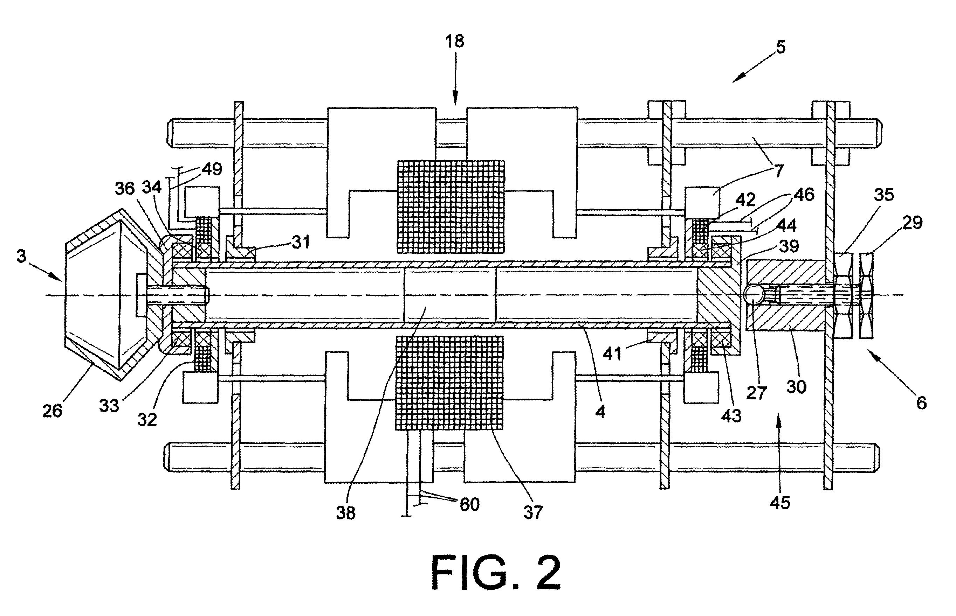

Die Figur 2 zeigt in einem vergrößerten Maßstab eine mögliche Ausführungsform einer Magnetlagerung 5 mit einem Axialfanglager 45. Die Bauform der dargestellten Magnetlagerung 5 ist dabei, zumindest teilweise, durch den verwendeten Einzelantrieb 18 mit seinen Motormagneten 38 und seiner Motorspule 37 vorgegeben.

Am Statorgehäuse 7 sind Begrenzungslager 31 und 41 festgelegt, die radiale Endanschläge für den Rotorschaft 4 darstellen. Das heißt, die Begrenzungslager 31, 41 verhindern, daß der Spinnrotor 3 beim Auftreten von Schwingungen oder bei einem Energieausfall an den Magnetlagerkomponenten 32, 34; 42, 44 anlaufen kann. Ebenfalls am Stator angebracht sind die nicht rotierenden Komponenten der Magnetlagerung 5. Im einzelnen handelt es sich hierbei um die Magnetlagerspulen 32 und 42 mit ihren Anschlüssen 49 und 46 sowie um die Lagermagnete 34 und 44. Ihnen stehen in geringem Abstand die Lagermagnete des Rotors, die die Bezugszahlen 33 und 43 tragen, gegenüber. Der vordere Lagermagnet 33 des Rotors wird von einer Rotortassenaufnahme 36 eingefaßt, der hintere Lagermagnet 43 des Rotors ist in einem mit der Bezugszahl 39 gekennzeichneten Lagerdeckel angeordnet. Der Lagerdeckel 39 und die Rotortassenaufnahme 36 sind jeweils stirnseitig am Rotorschaft 4 angebracht. An der Rotortassenaufnahme 36 ist die Rotortasse 26 angeordnet.

Im hinteren Bereich der Magnetlagerung 5 befindet sich das insgesamt mit 45 bezeichnete Axialfanglager. Es besteht im einzelnen aus der Abstützkugel 27 und der Einstelleinrichtung 6. Die Einstelleinrichtung 6 selbst besteht aus dem am Stator 7 anliegenden Schraubbock 30, der Einstellschraube 29 sowie der Kontermutter 35 zur Fixierung der Einstellung.

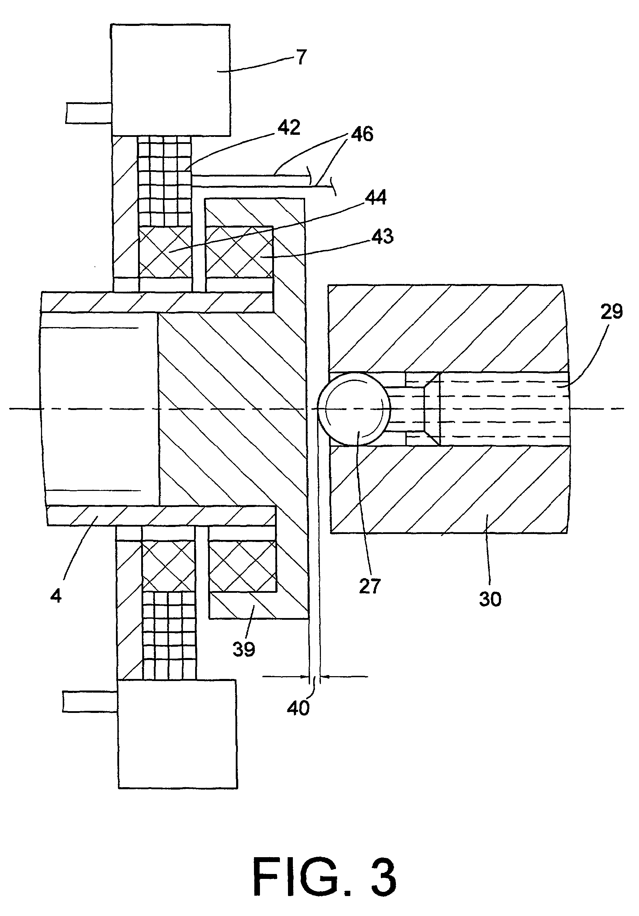

In einer weiteren Darstellung, die in Figur 3 gezeigt ist, ist der Endbereich der bereits in Figur 2 dargestellten Magnetlagerung 5 zu sehen. In vergrößertem Maßstab sind hier unter anderem der Schraubbock 30 und die Einstellschraube 29 zu erkennen. Mit der oben beschriebenen Einstelleinrichtung 6 des Axialfanglagers 45 kann ein Axialfanglagerspiel 40 eingestellt werden. Das Axialfanglagerspiel 40 definiert bei eingeschalteter Magnetlagerung 5 den Zwischenraum zwischen dem hinteren Lagerdeckel 39 und der Abstützkugel 27.

Des weiteren ist der Endbereich des Rotorschaftes 4 mit dem endseitig angesetzten Lagerdeckel 39 zu sehen, in dem der hintere Lagermagnet 43 angeordnet ist. Am Stator 7 angebracht sind zusätzlich der hintere Lagermagnet 43 sowie die hintere Lagerspule 42 mit ihren Anschlüssen 46 zur Bestromung erkennbar.

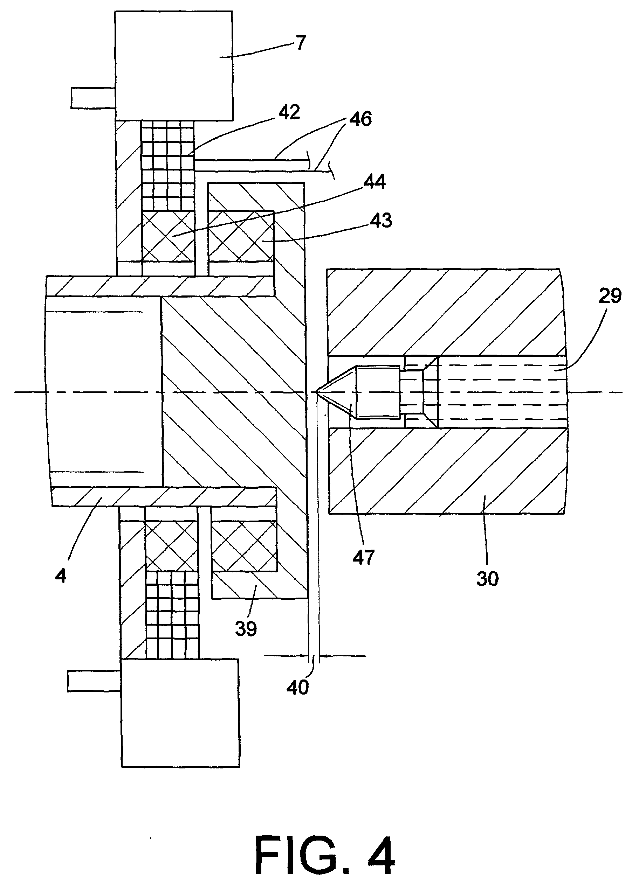

Figur 4 zeigt eine alternative Ausführungsform des Endbereichs der Magnetlagerung 5.
Das Axialfanglager unterscheidet sich von der in Figur 3 dargestellten Ausführungsform unter anderem durch die Art des Abstützelementes. Statt der in Figur 3 dargestellten Abstützkugel 27 wird hier eine kegelförmige Abstützspitze 47 verwendet. Die Abstützspitze 48 kann dabei ein Einzelbauteil darstellen oder, wie in Fig.4 angedeutet, eine an eine Einstellschraube 29 angeformte Spitze sein.

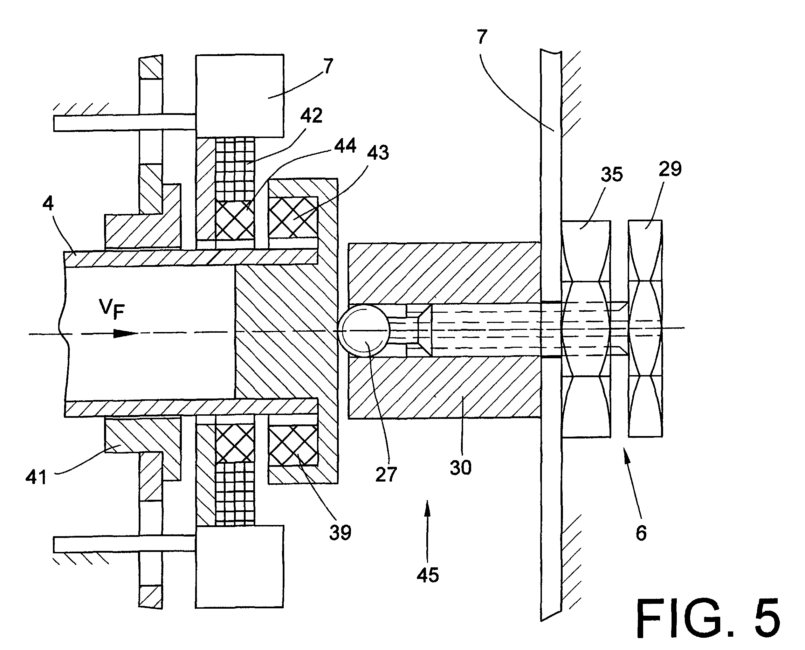

In Figur 5 ist der Endbereich einer abgeschalteten bzw. energielosen Magnetlagerung 5 dargestellt. Der Rotorschaft 4 des Spinnrotors 3 liegt an seinem Axialfanglager 45 an. Der Spinnrotor 3 ist in seiner axialen Vorzugsfallrichtung V_{F}, in diesem Fall von der Spinnseite weg, weggedriftet und liegt an der Stützkugel 27 des Axialfanglagers 45 an.

Wie vorstehend erwähnt, kommt der bei Energieausfall, aufgrund geeigneter, später zu erläuternter Maßnahmen, in Vorzugsfallrichtung V_{F} abgleitende Spinnrotor 3, nach Überwindung des Axialfanglagerspiels 40 an einer Abstützkugel 27 des Axialfanglagers 45 zur Anlage. Das Axialfanglagerspiel 40 ist dabei mittels Einstelleinrichtung 6 auf die gewünschte Größe eingestellbar.

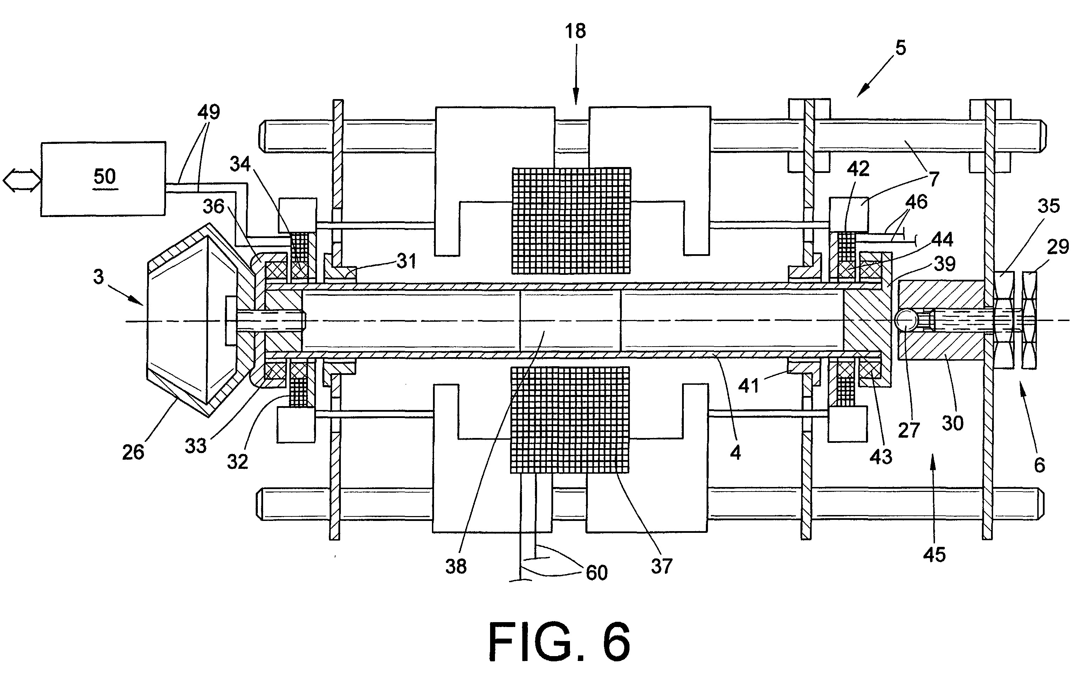

Die Figur 6 zeigt eine Magnetlagerung 5, deren Magnetlagerspulen 32 und oder 42 über eine elektrische Schaltung 50 definiert bestrombar sind. Die elektrischen Schaltung 50 zur Ansteuerung mindestens einer der Lagerspulen 32 und 42 (hier der vorderen Lagerspule 32), und damit zur Aufprägung der axialen Vorzugsfallrichtung V_{F} ist symbolisch als 'Black-Box' dargestellt. Die elektrische Schaltung 50 ist über die Anschlüsse 49 mit der Lagerspule 32 verbunden.

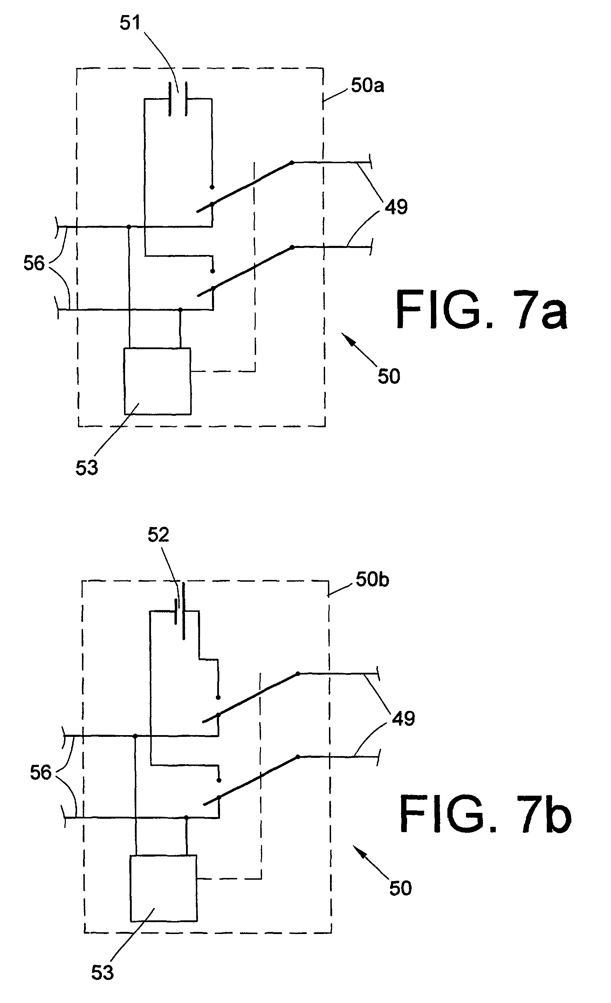

Die Figuren 7a- 7d zeigen einen beispielhaften Überblick über mögliche Gestaltungen der elektrischen Schaltung 50.

Figur 7a, mit der elektrischen Schaltung 50a, zeigt hierbei den Einsatz eines Kondensators 51 zur kurzzeitigen Speisung der vorderen Lagerspule 32 bei Energieabfall. Die mit 56 bezeichneten Anschlußleitungen dienen zur Bestromung der Lagerspule 32 während des Spinnbetriebes. Bei Energieabfall detektiert ein angeschlossener elektrischer Unterspannungswächter 53 den Energieverlust und schließt über Schalter 48 einen Notstromkreis in dem der Kondensator 51 integriert ist. Der Notstromkreis ist dann an die Anschlüsse 49 angeschlossen, wodurch der abfließende Strom des Kondensators 51 die Lagerspule 32 bestromt und so den Spinnrotor 3 in eine Vorzugsfallrichtung V_{F} (von der Spinntassenseite weg) drückt.

In Figur 7b ist ein vergleichbares Schaltungsprinzip 50b dargestellt. Statt eines Kondensators kommt jedoch ein Akkumulator 52 zum Einsatz. Die Verwendung eines Akkus 52 bringt den Vorteil, daß nicht immer wieder aufgeladen werden muß, wie das bei der Verwendung des Kondensators 51 nötig wäre.

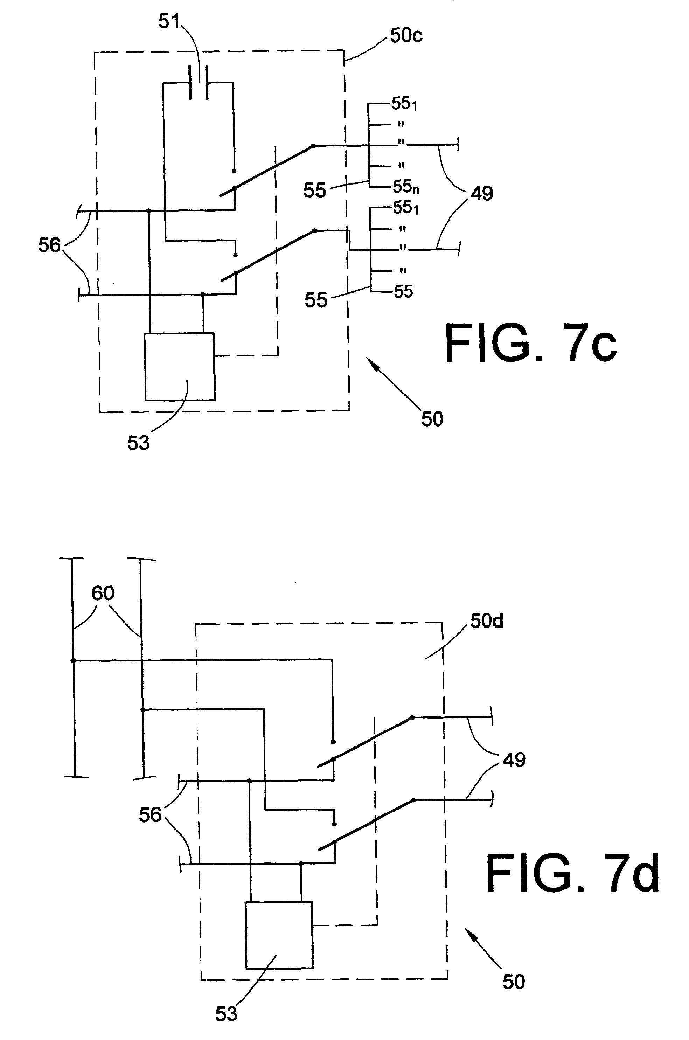

In Figur 7c ist die Vernetzung mehrerer Spinnstellen (1-n) zu einem Verbund beschrieben. Die Funktion der Schaltung 50c ist analog zu der im Ausführungsbeispiel 7b beschriebenen Schaltung 50b. Unterschiedlich ist jedoch die Anordnung des Akkus 52 und des elektrischen Unterspannungswächters 53 an einem zentralen Ort. Der Anschluß mehrerer Magnetlagerungen 5 erfolgt über die Verteiler 55 von denen aus der Notstromkreis auf die Anschlüsse 49 gelegt wird, wodurch der abfließende Strom des Akkumulators 52 die jeweiligen Lagerspulen 32 bestromt und so die Spinnrotoren 3 in eine Richtung (von den Spinntassenseiten weg) drückt. Vorteilhaft ist hier die kostengünstigere Gestaltung durch die Verwendung des Akkus 52 und des elektrischen Unterspannungswächters 53 für n Magnetlagerungen.

In Figur 7d wird eine Auslegung der elektrischen Schaltung 50d dargelegt, die wie die bereits oben beschriebenen Anordnungen über einen elektrischen Unterspannungswächter 53 verfügt, aber eine andere Energiequelle als Speisung für den Notstromkreis benutzt. Als Energiequelle wird hier die Energie aus den Anschlüssen 60 des Motors abgezogen, die er während des Auslaufens im Generatorbetrieb erzeugt. Die umgeleitete Energie läßt den Spinnrotor 3 durch Bestromung der Lagerspule 32 in seine bevorzugte Richtung wandern.

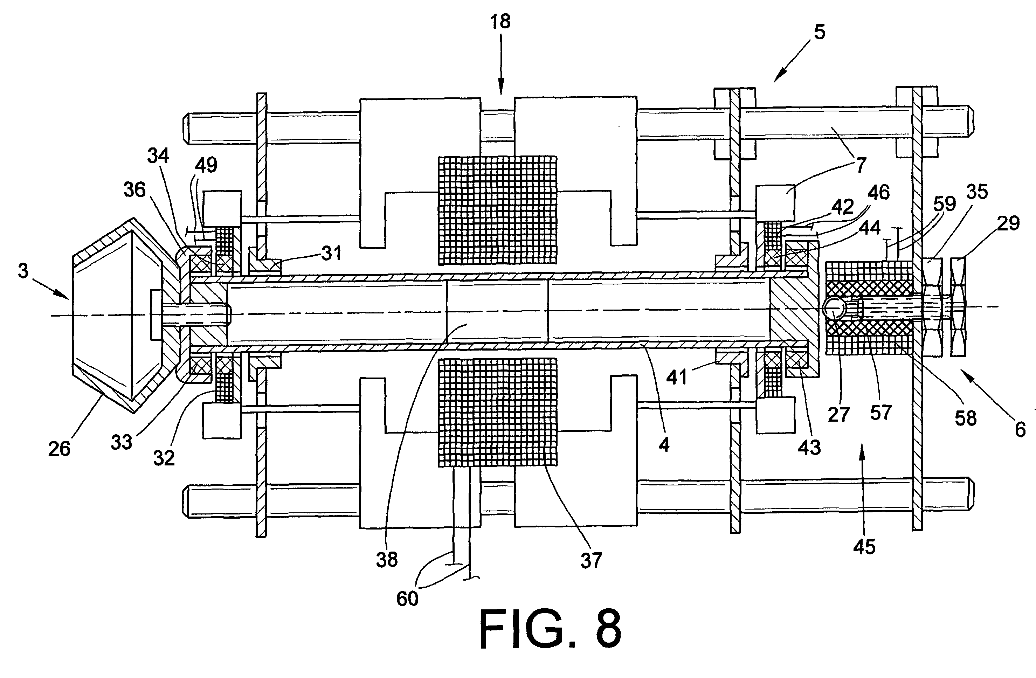

Die Figur 8 zeigt eine vorteilhafte Gestaltungsform der Erfindung in Form eines magnetischen Axialfanglagers 45. Unterschiedlich zu einer Ausführung nach Figur 2 ist, daß statt des Schraubbockes 30 hier ein Axialfanglagermagnet 57 mit einer ihn umgebenden Axialfanglagerspule 58 eingesetzt werden. Durch dauerhafte Bestromung der Axialfanglagerspule 58 durch die Anschlüsse 59 während des normalen Spinnbetriebes wird die magnetische Wirkung des Axialfanglagermagneten 57 vollständig kompensiert. Bei einem Ausfall der Energie wird auch die Axialfanglagerspule 58 nicht mehr bestromt und die Magnetkräfte des Axialfanglagermagneten 57 werden nicht mehr kompensiert. Der Axialfanglagermagnet 57 zieht dann mit seiner Magnetkraft, die auch auf die ferrometallischen Komponenten des Spinnrotors 3 wirkt, den Rotor zu sich heran, wodurch eine bevorzugte Fallrichtung V_{F} geschaffen ist.

## Patentansprüche

1. Lagerung des Schaftes (4) eines Spinnrotors (3) einer Offenend-Spinnvorrichtung, wobei der Schaft (4) axial berührungslos magnetisch horizontal gelagert ist, eine rotationssymmetrisch zur Rotorachse ausgebildete und angeordnete Magnetpaarung aus jeweils schaft- und statorseitiger Komponente (34,44,33,43) besitzt, die radiale Lagerung ebenfalls berührungslos magnetisch ist und die Lagerung zwei axial beabstandete Magnetpaare (34,44,33,43) besitzt, bei denen sich jeweils ungleiche Magnetpole gegenüberstehen, sowie zum Einhalten einer axialen Mittenposition eine elektromagnetische Mittenlageregelung (32,42,46,49,50) angeschlossen ist
**dadurch gekennzeichnet,**
**daß** die Lagerung derart ausgebildet ist, daß der Schaft bei Stromausfall durch Veränderung der Magnetkräfte mit einer axialen Vorzugsfallrichtung beaufschlagt ist.

2. Lagerung nach Anspruch 1, **dadurch gekennzeichnet, daß** die axial angeordneten Magnetlager derart ausgebildet sind, daß ihre Magnetkräfte im Falle eines Energieausfalls eine axiale Vorzugsfallrichtung des Spinnrotors (3) in Richtung eines Axialfanglagers (45) erzwingen.

3. Lagerung nach Anspruch 2, **dadurch gekennzeichnet, daß** die Magnetlagerung (5) vordere und hintere Magnetlagerkomponenten (33,34 bzw. 43,44) besitzt und durch unterschiedliche magnetische Auslegung dieser Komponenten eine Vorzugsfallrichtung des Spinnrotors (3) vorgebbar ist, die während des Spinnbetriebes durch entsprechende Bestromung von mindestens einer, im Bereich der Magnetlagerkomponenten (33, 34 bzw. 43, 44) angeordneten, Magnetlagerspule (32 bzw. 42) kompensierbar ist.

4. Lagerung nach Anspruch 1, **dadurch gekennzeichnet, daß** die axiale Mittenlagereglung durch gezielte Bestromung mindestens einer, je in der Nähe eines der Statormagneten (34,44) angeordneten, Spule (32,42) erfolgt und daß eine elektrische Schaltung (50) zur Einleitung bzw. Pufferung elektrischer Energie vorgesehen ist, durch die bei Energieausfall eine oder beide Magnetlagerspulen (32, 42) derart beaufschlagbar sind, daß sich eine definierte Vorzugsfallrichtung des Spinnrotors (3) einstellt.

5. Lagerung nach Anspruch 4, **dadurch gekennzeichnet, daß** die elektrische Schaltung (50) einen Kondensator (51) aufweist, der über Anschlüsse (46,49) mit mindestens einer der Magnetlagerspulen (32,42) verbunden werden kann.

6. Lagerung nach Anspruch 4, **dadurch gekennzeichnet, daß** die elektrische Schaltung (50) einen Akkumulator (52) aufweist, der über Anschlüsse (46,49) mit mindestens einer der Magnetlagerspulen (32,42) verbunden werden kann.

7. Lagerung nach Anspruch 4, **dadurch gekennzeichnet, daß** der Spinnrotor (3) über einen Einzelantrieb (18) verfügt, der über die elektrische Schaltung (50) derart mit mindestens einer der Magnetlagerspulen (32,42) verbunden ist, daß bei Generatorbetrieb des auslaufenden Einzelantriebes (18) Energie zur definierten Bestromung mindestens einer der Magnetlagerspulen (32,42) bereitsteht.

8. Lagerung nach Anspruch 4, **dadurch gekennzeichnet, daß** eine elektrische Schaltung (50) vorgesehen ist, die ein Abgreifen des Spannungswertes und dessen Vergleich mit einem Mindestspannungswert ermöglicht, und bei dessen Unterschreitung Energie für die Aufprägung der axialen Fallrichtung bereitstellt.

9. Lageranordnung nach Anspruch 2, **dadurch gekennzeichnet, daß** das Axialfanglager (45) eine Einstelleinrichtung (6) besitzt, das eine definierte Einstellung des Axialfanglagerspiels (40) ermöglicht.

10. Lageranordnung nach Anspruch 2, **dadurch gekennzeichnet, daß** das abstützende Element des Axialfanglagers (45) eine Abstützkugel (27) ist.

11. Lageranordnung nach Anspruch 2, **dadurch gekennzeichnet, daß** das abstützende Element des Axialfanglagers (45) eine Abstützspitze (47) ist.

## Claims

1. A bearing of the shaft (4) of a spinning rotor (3) of an open-end spinning device, wherein the shaft (4) is mounted axially without magnetic contact and horizontally, has a pair of magnets which are constructed and disposed rotationally symmetrically to the rotor axis and consists of components (34, 44, 33 43) on the shaft side and on the stator side, the radial bearing is also without magnetic contact and the bearing has two axially spaced pairs of magnets (34, 44, 33, 43), in which unlike magnetic poles are opposite one another, and also to maintain an axial central position an electromagnetic centre position regulator (32, 42, 46, 49, 50) is provided,
**characterised in that** the bearing is constructed in such a manner that the shaft is supplied with an axial preferred falling direction if there is a loss of power by changing the magnetic forces.

2. A bearing according to Claim 1,
**characterised in that** the axially disposed magnetic bearings are constructed in such a manner that in the event of a power failure their magnetic forces force an axial preferred falling direction of the spinning rotor (3) in the direction of an axial catch bearing (45).

3. A bearing according to Claim 2,
**characterised in that** the magnetic bearing (5) has front and rear magnetic bearing components (33, 34 and 43, 44) and by varying the magnetic design of these components a preferred falling direction of the spinning rotor (3) can be set, which during the spinning operation can be compensated by appropriately providing current to at least one magnetic bearing coil (32 or 42) disposed in the region of the magnetic bearing components (33, 34 or 43, 44).

4. A bearing according to Claim 1,
**characterised in that** the axial centre position regulation takes place by purposefully supplying current to at least one coil (32, 42) disposed in the vicinity of one of the stator magnets (34, 44),
and **in that** an electric circuit (50) is provided to introduce and store electrical energy, by which one or both magnetic bearing coils (32, 42) can be supplied in the event of a power failure in such a manner that a defined preferred falling direction of the spinning rotor (3) is set.

5. A bearing according to Claim 4,
**characterised in that** the electric circuit (50) comprises a capacitor (51) which can be connected via connections (46, 49) to at least one of the magnetic bearing coils (32, 42).

6. A bearing according to Claim 4,
**characterised in that** the electric circuit (50) comprises an accumulator (52) which can be connected via connections (46, 49) to at least one of the magnetic bearing coils (32, 42).

7. A bearing according to Claim 4,
**characterised in that** the spinning rotor (3) has a separate drive (18), which is connected via the electric circuit (50) to at least one of the magnetic bearing coils (32, 42) in such a manner that during generator operation of the slowing down separate drive (18) energy is provided to supply current in a defined manner to at least one of the magnetic bearing coils (32, 42).

8. A bearing according to Claim 4,
**characterised in that** an electric circuit (50) is provided, which enables the voltage value to be callipered and it to be compared with a minimum voltage value, and when said value is not satisfied energy is provided for the impression of the axial falling direction.

9. A bearing arrangement according to Claim 2,
**characterised in that** the axial catch bearing (45) has an adjustment mechanism (6) which enables a defined adjustment of the axial catch bearing clearance (40).

10. A bearing arrangement according to Claim 2,
**characterised in that** the supporting element of the axial catch bearing (45) is a supporting ball (27).

11. A bearing arrangement according to Claim 2,
**characterised in that** the supporting element of the axial catch bearing (45) is a supporting tip (47).

## Revendications

1. Montage de la tige (4) d'un rotor de filage (3) d'un métier à filer à fibre libérée (open-end), sachant que
- la tige (4) est montée horizontalement par voie magnétique sans contact dans la direction axiale et possède une paire d'aimants qui sont chacun constitués d'un élément côté tige et d'un élément côté stator (34, 44, 33, 43), laquelle paire d'aimants est réalisée et disposée avec une symétrie de révolution par rapport à l'axe du rotor,
- le montage dans la direction radiale est également réalisé sans contact, par voie magnétique, et
- le palier possède deux paires d'aimants (34, 44, 33, 43) espacées l'une de l'autre dans la direction axiale, au sein desquelles des pôles magnétiques différents se font toujours face
- et sachant qu'un dispositif de régulation électromagnétique de la position centrale (32, 42, 46, 49, 50) y est raccordé, afin de faire respecter une position centrale dans la direction axiale, **caractérisé en ce que** le montage est réalisé de telle manière qu'en cas de coupure de courant, la tige, du fait de la modification des forces magnétiques, tombe de préférence dans la direction axiale.

2. Montage selon la revendication 1, **caractérisé en ce que** les paliers magnétiques disposés dans la direction axiale sont réalisés de telle sorte que leurs forces magnétiques, en cas de panne d'énergie, forcent le rotor de filage (3) à tomber préférentiellement dans la direction axiale, vers un palier de réception axial (45).

3. Montage selon la revendication 2, **caractérisé en ce que** le palier magnétique (5) possède des éléments de palier magnétique avant et arrière (respectivement 33, 34 et 43, 44) et **en ce que** la conception magnétique différente de ces éléments permet de prédéfinir une direction de chute préférentielle du rotor de filage (3) qui, pendant le filage, peut être compensée par une mise sous tension appropriée d'au moins une bobine de palier magnétique (32 ou 42) placée dans la zone des éléments de palier magnétique (respectivement 33, 34 et 43,44).

4. Montage selon la revendication 1, **caractérisé en ce que** la régulation axiale de la position centrale est réalisée en mettant sous tension de façon ciblée au moins une bobine (32, 42) située chaque fois à proximité de l'un des aimants de stator (34, 44), et **en ce qu'**un circuit électrique (50) est prévu pour amener ou amortir l'énergie électrique destinée à alimenter une bobine de palier magnétique ou les deux (32, 42) en cas de panne d'énergie, de telle manière que le rotor de filage (3) tombe préférentiellement dans une direction définie.

5. Montage selon la revendication 4, **caractérisé en ce que** le circuit électrique (50) comprend un condensateur (51) pouvant être relié par l'intermédiaire de bornes (46, 49) à au moins l'une des bobines de palier magnétique (32, 42).

6. Montage selon la revendication 4, **caractérisé en ce que** le circuit électrique (50) comprend un accumulateur (52) pouvant être relié par l'intermédiaire de bornes (46, 49) à au moins l'une des bobines de palier magnétique (32,42).

7. Montage selon la revendication 4, **caractérisé en ce que** le rotor de filage (3) dispose d'un entraînement individuel (18) qui est relié par le biais du circuit électrique (50) à au moins l'une des bobines de palier magnétique (32, 42) de telle sorte que, lorsque l'entraînement individuel (18) alimenté par une génératrice court sur son erre, de l'énergie est mise à disposition pour mettre sous tension de façon définie au moins l'une des bobines de palier magnétique (32, 42).

8. Montage selon la revendication 4, **caractérisé en ce qu'**est prévu un circuit électrique (50) qui permet de mesurer la tension et de comparer la valeur relevée à une valeur de tension minimale, et qui, lorsque cette valeur seuil inférieure n'est pas atteinte, fournit de l'énergie pour que la chute ait lieu dans la direction axiale.

9. Disposition de palier selon la revendication 2, **caractérisée en ce que** le palier de réception axial (45) possède un dispositif de réglage (6) qui permet un réglage ciblé du jeu (40) du palier de réception axial.

10. Disposition de palier selon la revendication 2, **caractérisée en ce que** l'élément d'appui du palier de réception axial (45) est une bille d'appui (27).

11. Disposition de palier selon la revendication 2, **caractérisée en ce que** l'élément d'appui du palier de réception axial (45) est une pointe d'appui (47).
